# EUROPEAN PATENT APPLICATION

(11) **EP 2 335 467 A1**
(43) Date of publication of application: **22.06.2011**
(21) Application number: 09425516.3
(22) Date of filing: 21.12.2009
(51) Int. Cl.: A01C 7/08

(54) **Agricultural machine for distributing granular and/or powdery products on the field**

(71) Applicant: Startec S.r.l., 33078 San Vito al Tagliamento (PN) (IT)
(72) Inventor: Sut, Livio, 33078 San Vito al Tagliamento Pordenone (IT)
(74) Representative: Giugni, Valter

(57) **Abstract**

The present invention refers to an agricultural machine (1) including a tractor (2), a bin or hopper (3) for holding products in granular and/or powdered form, a device (4) for distributing said products on the field and a conveying and metering system (5) to convey and meter the products from the bin (3) to the distribution device (4), **characterized in that** said conveying and metering system (5) includes a duct (16) consisting essentially of a flexible external tube (20) that encloses a flexible core (22) on which is wound a flexible feeding screw (21) in such a manner that the whole duct is flexible and works as a single element for carrying and metering the correct quantity of product to distribute.

## Description

### FIELD OF INVENTION

The present invention refers to an agricultural machine equipped with devices for distributing products in granular and/or powdery form on the field. In particular, the invention is relative to an agricultural machine in which said devices have been designed to allow the handling and the distribution of seeds and/or fertilizers and/or pesticides and/or other products on the fields, in a simple and effective manner.

### BACKGROUND OF INVENTION

The agricultural machines that operate in the field to carry out sowing, fertilizing or other treatments include one or more bins or hoppers for holding said products usually positioned remote from the point of distribution on the ground. For example, a product holding bin is installed in front of a tractor, while the distribution of said product takes place at the rear of the tractor through suitable distributing devices. This arrangement is conventionally adopted to balance the weight, or to distribute the overall dimensions. In fact, the distributing devices are generally positioned at the rear, and consequently to balance/distribute the load on the tractor, but also, for dimensional requirements, the bin is mounted with suitable supports in the front.

The product to be distributed is therefore generally subjected to being carried from the front part to the rear part of the tractor, usually through a tube, to be measured there and subsequently distributed on the field in suitable quantities, without causing any unwanted scattering or accumulations. In the case of solid, granular or powdery products, both the conveying and the metering before the distribution must be carried out correctly to have a regular flow in the desired quantity and so as to avoid an uneven distribution and the clogging of the conveying system.

Conveying and metering may take place with various systems. One of them consists of carrying the products from the front part to the rear part of the tractor by means of a worm screw feeder. In the rear part there is a metering device that collects the unmetered product in bulk which includes a second bin, downstream of which is released the product properly metered with suitable metering devices.

It is evident that the transportation is carried out in an uncontrolled manner and has the purpose of simply supplying and continuously feeding the bin of the metering device to, in turn, allow the metering devices to be always supplied and to constantly release the correct quantity of product to the distribution devices as the tractor moves through the field.

Although an agricultural machine provided with the above-mentioned system is effective, it is complicated as it requires first of all a supplementary bin dedicated to the collection on the rear part of the tractor of the products to distribute. In addition, it is also necessary to have a metering device in communication with said bin and constantly supplied. For this purpose, it is also necessary to have level sensors capable of detecting the quantity of product present in the bin in order to avoid on one hand the possibility of the metering device remaining without product and, on the other, to avoid the device becoming clogged with too much product. The sensors must, therefore, be functionally connected with the conveying devices in order to control and adjust the flow of the product and to avoid said extreme situations. Alternatively, a return path may be provided in order to return any excess product to the bin at the front of the tractor.

It must also be considered that the complexity as described above implies problems of encumbrances that hinder the visibility and the freedom of movement of the operator and devices and elements that require maintenance and regular checks, with consequent high costs of production and maintenance.

### SUMMARY OF THE INVENTION

The technical problem underlying the present invention is therefore to devise an agricultural machine that includes devices that are at the same time simple and reliable for conveying and metering on the field products in granular and/or powdered form, so as to guarantee a constant transportation of the products from the front part to the rear of a tractor in predetermined quantities.

This problem is solved by an agricultural machine that includes a system for conveying and metering products to be spread on the field that avoids the need of having the above-mentioned supplementary bin, the relative sensors and the metering devices that communicate with the bin.

The subject matter of the invention is therefore an agricultural machine for distributing products in granular and/or powdered form on the fields, as covered by the enclosed claims.

### BRIEF DESCRIPTION OF THE DRAWINGS

Further characteristics and the advantages of the agricultural machine of the invention will become more evident from the following description of an embodiment given purely by way of non-limiting example with reference to the following figures, in which:
- Figure 1 is a side view of a farming machine including the conveying and metering system according to the present invention;
- Figure 2 is a detail of the front part of the agricultural machine of Figure 1 with a hopper or bin for holding a product to be distributed on the field;
- Figure 3 is a rear view of the hopper of Figure 2 with an upstream portion of a conveying device according to the invention;
- Figure 4 is a side view of a detail of the hopper and the conveying device of Figure 3;
- Figure 5 is a view from above of a detail of a downstream portion of the conveying device of the invention.

### DETAILED DESCRIPTION OF THE INVENTION

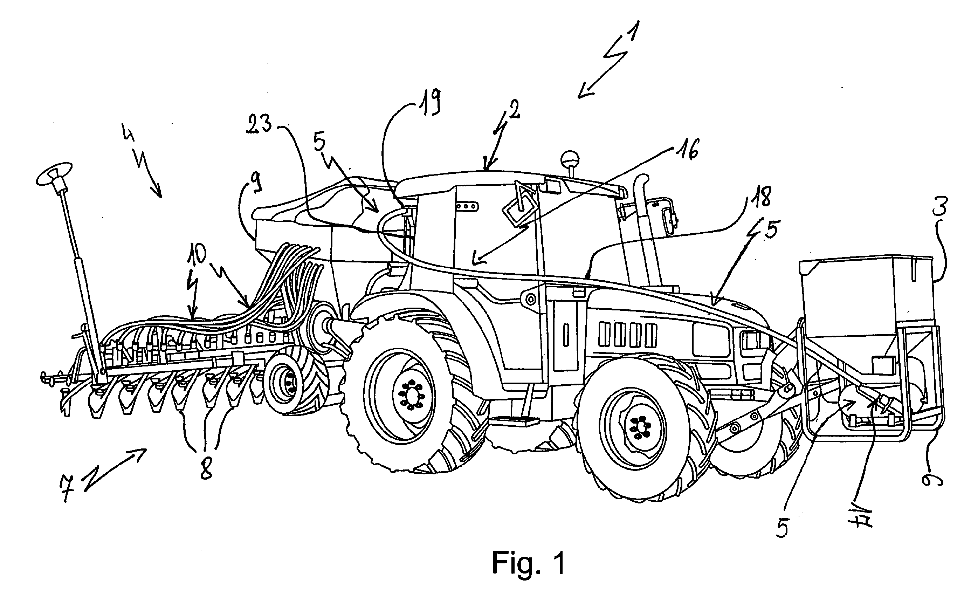

With reference to Figure 1, reference numeral 1 indicates overall an agricultural machine for distributing products in granular and/or powdered form on the field.

The agricultural machine 1 may include a tractor 2, a holding bin or hopper 3 for said products in granular and/or powdered form, a device 4 for distributing said products on the field and a conveying and metering system 5 for conveying and metering the products from the bin 3 to the distributing device 4.

The tractor 2 may be a common tractor used for pulling and for driving and controlling devices used in the cultivation and treatment of fields for growing crops. On its front part, the tractor 2 includes a support 6 suitable for holding the bin or hopper 3. Preferably, this support 6 includes a lattice metal frame on which is mounted in a reversible manner the bin 3 and part of the devices of the conveying and metering system 5 as required, as will be explained hereunder in detail. On the back part of the tractor are provided distributing devices 4 for the granular or powder products. In particular, as shown in Figure 1, said devices include a set 7 of conventional furrow-opening devices 8, which can be of seeder-blade, disk or other type, and have the function of opening the furrow to deposit the products in granular or powdered form, seeds, fertilizers and other products.

Preferably, the distribution devices 4 usually include a bin 9 with seed metering devices connected with each furrowing seeding device 8 through ducts 10 conveying a mixture of product to distribute and carrying air, a mixture created by means of conventional systems (not shown), including for example a blower, a measuring device and a mixing tube.

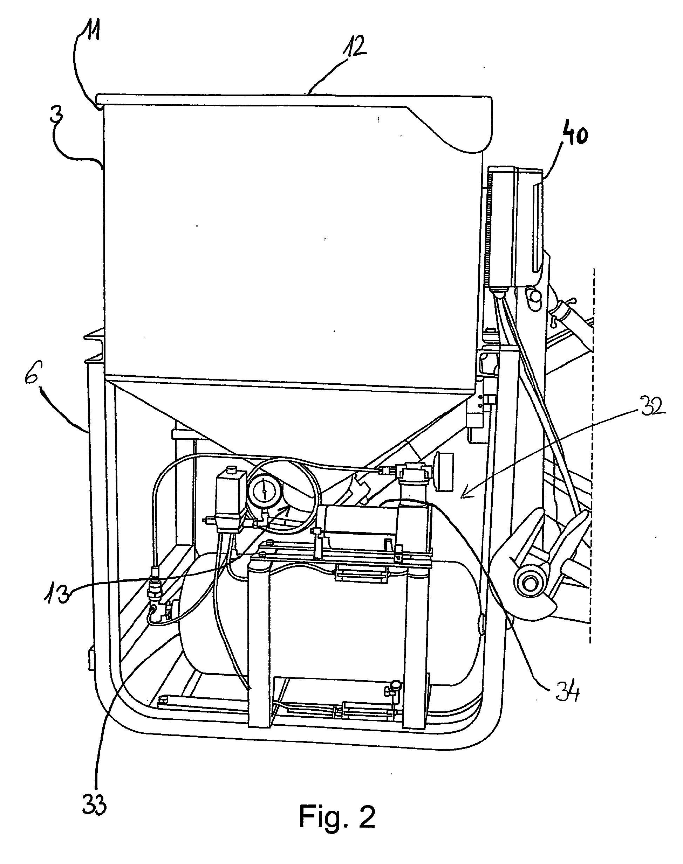

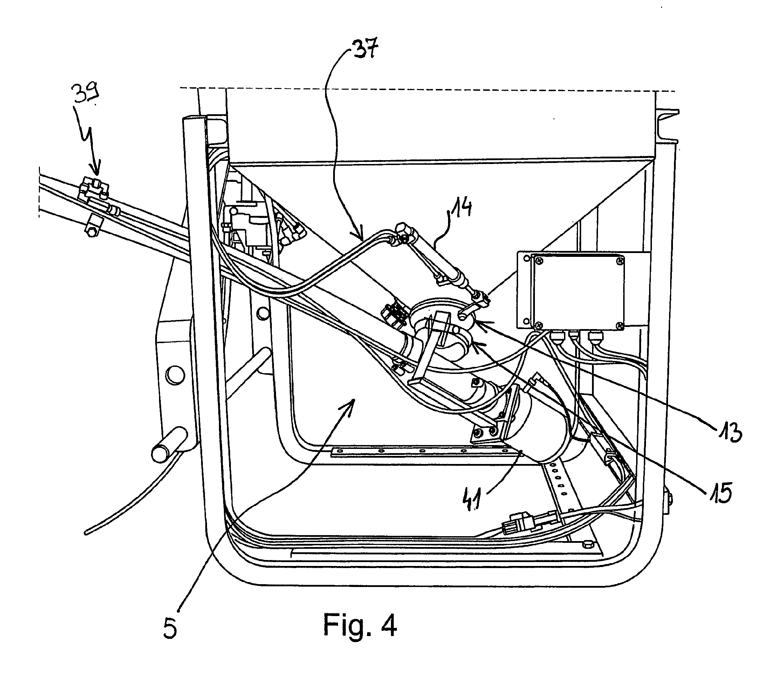

With reference to Figures 2, 3 and 4, the bin 3 or hopper is made up of a conventional container suitable for carrying products in granular and/or powdered form, such as, for example, seeds and/or fertilizers and/or pesticides and/or other products in solid form. Usually, the bin 3 includes a first opening 11 closed by a corresponding lid 12 and an opposite second opening 13 (Figures 2 and 4) provided with a gate valve that can be closed or opened by means of a mechanical piston 14 (Figure 4), preferably controlled pneumatically or hydraulically. The second opening 13 is located toward the bottom of the bin so as to allow the product to flow out by gravity.

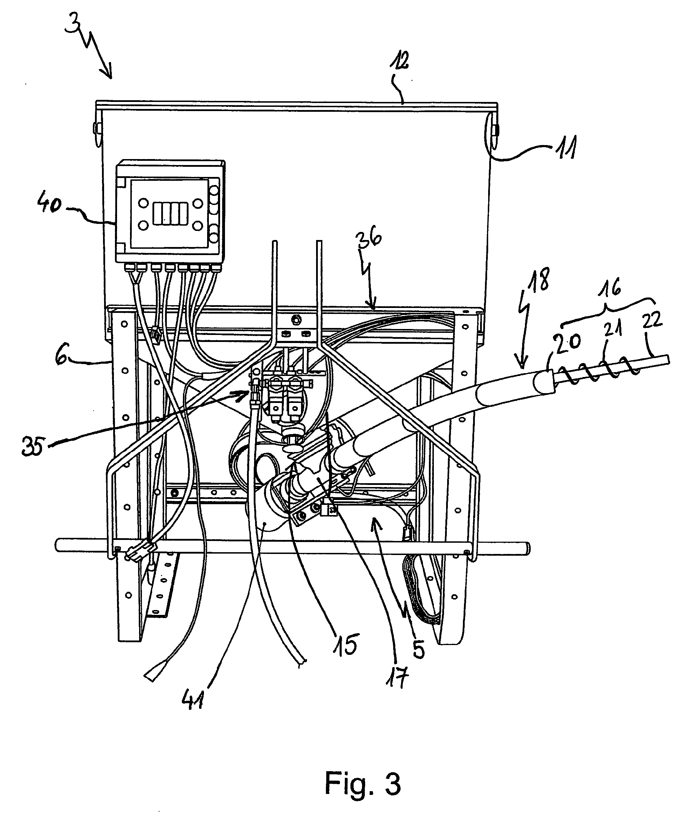

The second opening 13 is in communication with a first end portion of the conveying and metering system 5 through a connector or coupling 15 (Figures 3 and 4). Preferably, this connector is of ball-and-socket type so as to make it possible to orientate the first end portion of said system and, therefore, to guarantee its effective adaptability to different orientations and positions between the bottom of the bin 3 and the distributing devices 4, as well as the handling on the field, as will be explained hereafter.

The conveying and metering system 5 includes a flexible duct 16 provided with a first portion 17 coupled to said connector 15, a second portion 18 that leads away from said first portion and ends at a third portion 19 located at the rear of the tractor 2.

It should be remembered that the term "flexible" in the present description means a structure of the duct that is entirely flexible. In other words, every element of the duct is made up of flexible material. In particular, as shown in Figure 3, the duct includes a first external tube 20, which is itself flexible and hollow and encloses a flexible spiral screw 21 or screw feeder, which is in turn coiled around a central flexible element that may be a hollow tube or core 22. Each of said elements, external tube 20, screw feeder (spiral screw) 21 and core 22 are made up of flexible materials such as plastic or metal materials that may also have different compositions or, in other words, tubes of flexible plastic material reinforced, for example, with a steel mesh. The advantage offered by the use of an entirely flexible duct lies in the fact that the transportation of the products can be realized in a much more controlled, manageable and safe manner, compared to any other conveying system. In fact, it should be noted that the systems currently most in use consist of a pneumatic type of transportation, that is a transportation represented by a tube inside of which the products are carried in a stream of air blown by suitable means. Alternatively, feeder belts or screw feeders not completely flexible can also be used. However, it has been observed that the use of blown air tends to damage the products, while the use of transportation with belt or screw feeders that are not completely flexible does not allow adaptations of the system with respect to different dimensions and positioning of the bin 3 and of the distributing devices 4.

The second portion 18 is basically a connecting section, more or less curved and even set with different arcs and different directions of the duct 16, which, as already mentioned, connects the first portion 17 receiving the products from the bin 3 with the third portion 19, in which said products are discharged into one or more ducts 23 that supply the distributing devices 4 or the sowing devices 9, respectively. It should be noted that, thanks in fact to the flexibility of the duct 16, this section can be curved at will to clear the obstacles that the conveying system 5 encounters between the front bin 3 and the distributing devices 4 at the rear of the tractor 2. Moreover, it is not necessary to have more connectors or elbows with different radiuses of curvature, which are necessary in the case when conveying systems that are not totally flexible are used. It ensues that the system is considerably simplified and the resulting structure is very versatile.

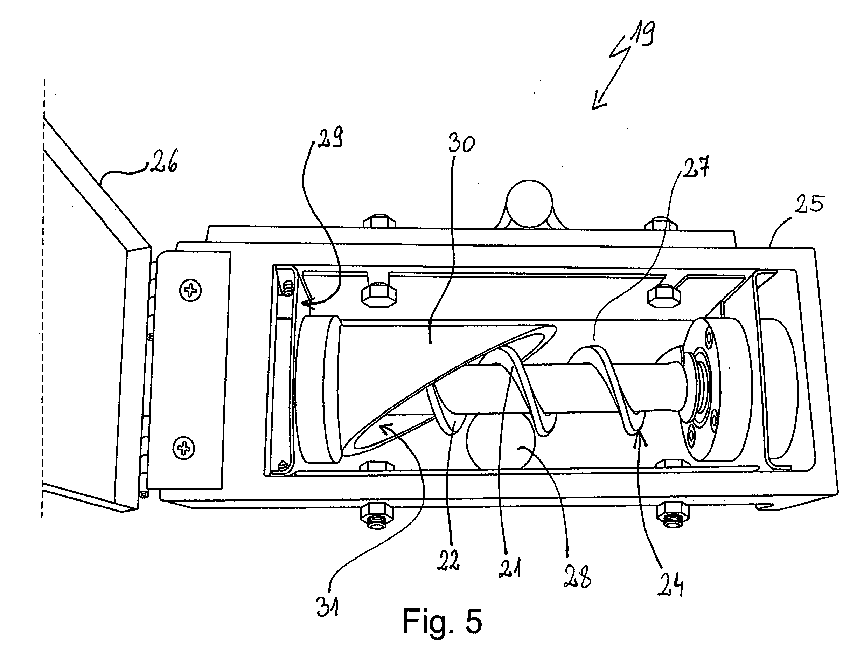

With reference to Figures 1 and 5, the third portion 19 of the duct 16 includes an end portion 24 of the feeder screw 21 and of the core 22 housed in a collecting element 25. In particular, the collecting element 25, as shown in Figure 5, is a box-like element provided with an inspection and maintenance lid 26 and with a bottom 27 provided with a discharge hole 28. Preferably, the collecting element 25 has a funnel-shaped cross section so as to convey the product released at the end portion 24 of the feeder screw 21 to the discharge hole 28, which will be in communication with the conveying duct 23 feeding, for example, the distributing devices 4. In particular, as shown in Figure 5, the end portion 24 crosses a side wall 29 of said collecting element 25 and ends at the opposite side wall, where it is rotatably supported by means of a bearing.

Advantageously, an element 30 for adjusting the gravity flow of the products into the hole 28 of said collecting element 25 is fastened reversibly to the side wall 29. Preferably, said element 30 is a hollow tubular element in the shape of a flute mouthpiece, with its opening 31 lying on a plane that is substantially inclined with respect to the longitudinal axis of the screw feeder and substantially perpendicular to the plane of the product discharge hole 28. Alternatively, the profile of the opening 31 may have a wavy progression and its plane can be inclined with respect to the plane of the hole 28. It has been observed that this mouthpiece shape makes it possible to improve the uniformity of the flow of product that arrives at the collecting element 25 without variations resulting from transportation by the pitches of the screw 21. In its turn, this adjustment makes it possible to have a steady and constant fall of product into the hole 28 with a metered quantity of said product.

From the above description, it is evident that the conveying system 5 also becomes a system of controlled metering of the product. In other words, the entirely flexible duct 16 works at the same time as a conveying device and as a dispenser of the correct quantity of product that must be distributed on a farm field.

Preferably, the adjusting element 30 is fastened in a manner rotatably adjustable to the wall 29 of the collecting element 25 through, for example, headless screws (not shown) to vary the orientation of its opening 31 and, consequently, the adjustment of said stream of product on the basis of the type of product carried and metered.

In agreement with a variant embodiment of the invention, the agricultural machine 1 can further include an unclogging system 32 to avoid the possible clogging of product at both the second opening 13 of the bin 3 and along the whole path of the duct 16.

This unclogging system 32, as shown in general in Figure 2, includes a compressor utilized to supply compressed air used for two functions: driving the piston 14 to close the second opening 13 and hold the product to be dispensed inside the bin 3 during transfers on the field; forcing air along the duct 16 in particular points where clogging could occur due to vibration and thus spread out the product along the feeder screw to resume the rotation of the screw. The compressor is of conventional type and includes a compressed air vessel 33, a compressor motor 34 for charging the pressure vessel, valve means 35 (better shown in Figure 3) suitable to control the piston 14 and to allow the outflow of the compressed air from the pressure vessel to the ducts 36 (shown in Figure 3) leading to predetermined points in the conveying and metering system 5.

The valve means 35 can be represented by a distributor or preferably solenoid valves controlled electrically by an electronic control unit 40 (Figure 2). The control unit 40 (Figs. 2 and 3) can be connected to an electric motor 41 driving the screw feeder 21. As is shown in Figures 3 and 4, the ducts 36 include a pair of first ducts 37 connected to said piston 14 controlling the opening 13 of the bin 3, a second group of one or more ducts 38 connected in suitable positions to the first portion 17 and if necessary to the second portion 18 of the duct 16 to release the product in potentially critical points.

The outflow ducts 38 are in turn in communication with the inside of the duct 16 through connectors 39 (one is shown in Figure 4).

Advantageously, the above-mentioned control unit 40 will be capable of varying the speed of the electric motor 41 according to predetermined values dependent, for example, on the different types of products to convey and measure out. Preferably, the control unit will be capable of sensing and acting to adjust any discrepancies with respect to said predetermined values so as to guarantee the conveying and continuous and controlled metering of product in the predetermined amount. Further, the control unit 40 controls the solenoid valves differentially to send timed streams of compressed air, starting preferably from the connector 39 furthest downstream, and continuing in sequence up to the first portion 17 to remove any clogging product along the whole path of the screw feeder. The control unit 40 can be positioned in the cabin on the tractor and can be provided with a display and a keyboard to allow the operator to adjust and change the parameters for distributing the products on the field.

From the above description, it is evident that the above-mentioned problems connected with the distribution and metering systems of the known art have been solved. At the same time, important construction and functional advantages have been achieved.

Firstly, the agricultural machine is equipped with a single conveying and metering system such as to simplify the structure and lower the risk of complications resulting from the connection of many functional elements. Consequently, the system is more economical and manageable with low maintenance costs.

Secondly, the flexibility of transportation and the metering through an entirely flexible duct and a ball joint allow a great adaptability not only in positioning and installation on any agricultural machine, but also favour the transportation of the same products without damage, especially as concerns the seeds.

Further, the end portion of the transportation and metering duct makes it possible to feed the distribution devices on the field and/or the fertilization, sowing or treatment devices in a continuous and constant manner with the correct quantity of product. Said quantity of product may also be even more finely controlled and corrected at any moment according to the type of product to be distributed, the forward speed of the agricultural machine and any changes in the speed of operation of the screw feeder, thanks to the control of the electronic control unit.

Moreover, the release system has the advantage of avoiding cloggings along the whole distribution system in the case, for example, of excess moisture clumping the product together, or if during a transfer of the agricultural machine the system is momentarily deactivated and the product within it compacts at critical points.

Numerous variants are possible with respect to the agricultural machine described above, all of them in effect included within the scope of protection of the present invention as defined by the enclosed claims.

For example, the unclogging system may make use of a compressor provided directly on the agricultural machine and not installed on the same structure 6 supporting the bin 3 of the product to be distributed.

The number and distribution of unclogging ducts may vary based on the delivery and/or length of the screw feeder and/or on the type of product to meter.

The means controlling the piston 14 to open the bin 3 may be electromechanical rather than pneumatic.

The screw feeder drive motor may be an electrical or a hydraulic motor, or a simple mechanical takeoff transmission from a wheel with suitable reduction gears, or better a gear box or a variator for adjusting the quantity to deliver.

## Claims

1. Agricultural machine (1) including a tractor (2), a bin or hopper (3) for holding products in granular and/or powdered form, a device (4) for distributing said products on the field and a conveying and metering system (5) to convey and meter the products from the bin (3) to the distributing device (4), **characterized in that** said conveying and metering system (5) includes a duct (16) consisting essentially of a flexible external tube (20) that encloses a flexible core (22) on which is wound a flexible feeding screw (21) in such a manner that the whole duct is flexible and works as a single element for carrying and metering the correct quantity of product to distribute.

2. Agricultural machine (1) according to claim 1, in which said duct (16) includes a first portion (17) joined to a connector (15) linked to said bin (3), a second portion (18) that leads off from said first portion and ends at a third portion (19) where said products are discharged into one or more ducts (23) leading to the distribution devices (4) or sowing devices (9).

3. Agricultural machine (1) according to claim 1 or 2, in which the bin (3) includes a connector (15) in communication with said first portion (17) of the duct (16) through an opening (13) of the bin, said connector being of a ball-and-socket type such as to make it possible to orientate said first end potion.

4. Agricultural machine (1) according to any one of claims 1 to 3, in which said duct (16) includes a first flexible and hollow external tube (20) that encloses a flexible spiral screw (21) or screw feeder, which is itself coiled around a central flexible element or core (22).

5. Agricultural machine (1) according to claim 4, in which said third portion (19) of the duct (16) includes an end portion (24) of the feeder screw (21) and of the core (22) housed in a collecting element (25).

6. Agricultural machine (1) according to claim 5, in which said collecting element (25) is a box-shaped element equipped with a lid (26) for inspection and maintenance and a bottom (27) provided with a hole (28) for discharging the products from the conveying and metering system (5) to the distribution device (4).

7. Agricultural machine (1) according to claim 5 or 6, in which said collecting element (25) has a funnel-shaped cross section so as to funnel the product released by the end portion (24) of the screw feeder (21) into the discharge hole (28), which will be in communication with the duct (23) conveying the product to the distribution devices (4).

8. Agricultural machine (1) according to claim 6 or 7, in which an element (30) for adjusting the gravity flow of the products into the hole (28) of said collecting element (25) is fastened reversibly to a side wall (29) of said collecting element (25).

9. Agricultural machine (1) according to claim 8, in which said adjusting element (30) is a hollow tubular element in the shape of a flute mouthpiece, with its opening (31) lying on a plane that is substantially inclined with respect to the longitudinal axis of the screw feeder.

10. Agricultural machine (1) according to any one of claims 3 to 9, including in addition a release system (32) that includes a compressor (33) to drive a piston (14) for opening/closing said second opening (13) of the bin (3) and/or to force air along said conveying and metering system (5) at particular points where a clogging of the products could occur.

11. Agricultural machine (1) according to claim 10, in which said compressor includes a compressed air vessel (33), a compressor motor (34) to charge the pressure vessel, valve means (35) suitable to drive the piston (14) and allow the exit of the compressed air from the vessel to conduits (36) feeding predetermined points in the conveying and metering system (5).

12. Agricultural machine (1) according to claim 11, in which said valve means (35) include a distributor or solenoid valves electrically controlled by an electronic control unit (40).

13. Agricultural machine (1) according to claim 12, in which said control unit (40) can moreover be connected to an electric motor (41) driving the feeder screw (21) to vary the rotation speed of the same.
